# EUROPEAN PATENT SPECIFICATION

(11) **EP 4 732 818 B1**
(45) Date of publication and mention of the grant of the patent: **02.12.2026**
(21) Application number: 25210096.1
(22) Date of filing: 21.10.2025
(51) Int. Cl.: A61G 5/08, A61G 5/10, B60B 3/00, B60B 3/14, A61G 5/02, A61G 5/04

(54) **ELECTRIC WHEELCHAIR AND WHEEL OF ELECTRIC WHEELCHAIR**
ELEKTRISCHER ROLLSTUHL UND RAD FÜR ELEKTRISCHEN ROLLSTUHL
FAUTEUIL ROULANT ÉLECTRIQUE ET ROUE DE FAUTEUIL ROULANT ÉLECTRIQUE

(30) Priority: 23.10.2024 JP 2024186965
(43) Date of publication of application: 29.04.2026
(73) Proprietor: Yamaha Hatsudoki Kabushiki Kaisha, Iwata-shi, Shizuoka 438-8501 (JP)
(72) Inventor: Iwaki, Yasuhiro, Iwata-shi, Shizuoka, 4388501 (JP)
(74) Representative: Grünecker Patent- und Rechtsanwälte PartG mbB

(56) References cited:
- US-A- 4 362 311

## Description

### BACKGROUND OF THE INVENTION

### FIELD OF THE INVENTION

The present disclosure relates to an electric wheelchair and a wheel of the electric wheelchair.

### 2. Description of the Related Art

The electric wheelchair disclosed in JPH09-173387A includes electric motors in the left and right wheels. The wheels can be removed from the frame of the electric wheelchair. A user can load the electric wheelchair with the wheels removed into a vehicle or store it at home.

The wheel of the electric wheelchair of JPH09-173387A has the rod 48 inserted in the cylindrical axle. The locking member 49 is attached to the end of the rod 48. The balls 52 are disposed on the outer peripheral surface of the locking member 49, which pushes the balls 52 outwardly from the outer peripheral surface of the axle 11. The balls 52 engage with the sleeve 54 provided on the frame, and the wheel is locked to the frame. That is, this prevents the wheel from separating from the frame. When the user pushes the rod 48 against the elastic force of the spring 51, the position of the locking member 49 shifts from the positions of the balls 52. This allows the balls 52 to sink, and releases the engagement between the balls 52 and the sleeve 54. This enables the user to remove the wheel from the frame.

In JPH09-173387A, in order to reattach the wheel that has been removed from the frame, the user must continue to press the rod 48 against the elastic force of the spring 51. In this regard, the wheels contain the electric motors and thus are heavy. When mounting the wheel to the frame, it is troublesome to continuously push the rod 48 and hold the heavy wheel so as to insert the axle 11 into the sleeve 54.

### SUMMARY OF THE INVENTION

The above drawback is overcome by a wheel according to claim 1.
(1) A wheel of an electric wheelchair proposed in the present disclosure includes a cylindrical axle to be fitted into a cylindrical support portion provided in a vehicle body, an operating rod that is inserted in the cylindrical axle, a first elastic member, a wheel lock member that is movable in a radial direction of the cylindrical axle between an engaging position, in which the wheel lock member engages with the cylindrical support portion, and a release position, in which the wheel lock member does not engage with the cylindrical support portion, and a stopper member. The operating rod is movable in an axial direction relative to the cylindrical axle between a wheel lock position, in which the wheel lock member is positioned in the engaging position, and a wheel lock release position, in which the wheel lock member is allowed to move to the release position. The operating rod is pushed from the wheel lock release position toward the wheel lock position by an elastic force of the first elastic member and is movable from the wheel lock position to the wheel lock release position by a pushing force applied by a user. The stopper member engages with the operating rod when the operating rod is positioned in the wheel lock release position and retains the operating rod in the wheel lock release position against the elastic force of the first elastic member.
(2) In the wheel of (1), the stopper member is disposed in an accommodation hole formed in the cylindrical axle and is movable inside the accommodation hole in the radial direction of the cylindrical axle. A stopper engagement part is formed on the operating rod. When the operating rod is in the wheel lock release position, the stopper member engages with the stopper engagement part to retain the operating rod in the wheel lock release position.
(3) In the wheel of (2), a through hole passing through the stopper member in the axial direction is formed in the stopper member, the operating rod extends through the through hole in the axial direction, and the stopper member includes an engagement part inside the through hole to engage with the stopper engagement part.
(4) In the wheel of any one of (1) to (3), when the cylindrical axle is pulled out from the cylindrical support portion in the axial direction while the operating rod is in the wheel lock release position, the operating rod automatically returns from the wheel lock release position to the wheel lock position by the elastic force of the first elastic member.
(5) In the wheel of any one of (2) to (4), the wheel lock release position includes a first position and a second position that is closer to the wheel lock position than the first position. The operating rod is pushed by the first elastic member from the first position toward the second position. When the operating rod is in the first position, the operating rod allows the wheel lock member to move to the release position and the stopper member engages with the stopper engagement part to retain the operating rod in the first position. When the operating rod is in the second position, the operating rod allows the wheel lock member to move to the release position and the stopper member does not engage with the stopper engagement part.
(6) In the wheel of (5), when the stopper member and the cylindrical axle are inside the cylindrical support portion, the operating rod is not retained in the first position and moves to the second position by the elastic force of the first elastic member.
(7) In the wheel of (5) or (6), the stopper member is movable in the radial direction of the cylindrical axle between a stopper position, in which the stopper member engages with the stopper engagement part to retain the operating rod in the first position, and a stopper release position, in which the stopper member and the stopper engagement part are released from each other. The stopper member is biased from the stopper release position to the stopper position by an elastic force of a second elastic member. When the stopper member and the cylindrical axle are inside the cylindrical support portion, a movement of the stopper member from the stopper release position to the stopper position is prevented.
(8) In the wheel of (7), the stopper member includes an interference part that protrudes from an outer peripheral surface of the cylindrical axle when the stopper member is in the stopper position. When the stopper member and the cylindrical axle are inside the cylindrical support portion, the interference part interferes with an inner peripheral surface of the cylindrical support portion to prevent the movement of the stopper member from the stopper release position to the stopper position.
(9) In the wheel of any one of (1) to (8), in a process in which the cylindrical axle is inserted into the cylindrical support portion while the operating rod is in the wheel lock release position, the operating rod is automatically released from the wheel lock release position.
(10) In the wheel of any one of (2) to (8), the stopper member is movable in the radial direction of the cylindrical axle between a stopper position, in which the stopper member engages with the stopper engagement part to retain the operating rod in the wheel lock release position, and a stopper release position, in which the stopper member and the stopper engagement part are released from each other. The stopper member includes an interference part that protrudes from an outer peripheral surface of the cylindrical axle when the stopper member is in the stopper position. The interference part is pushed by an inner peripheral surface of the cylindrical support portion and moves the stopper member from the stopper position to the stopper release position.
(11) In the wheel of any one of (1) to (10), when the operating rod is in the wheel lock position, the operating rod pushes the wheel lock member outward of the cylindrical axle in the radial direction to bring the wheel lock member into engagement with the cylindrical support portion. When the operating rod is in the wheel lock release position, the operating rod allows the wheel lock member to sink toward a center of the cylindrical axle in the radial direction.
(12) In the wheel of (11), the operating rod includes a large diameter part and a small diameter part that are away from each other in the axial direction. When the operating rod is in the wheel lock position, the large diameter part pushes the wheel lock member outward of the cylindrical axle in the radial direction and restricts a movement of the wheel lock member in the radial direction. When the operating rod is in the wheel lock release position, the small diameter part allows the wheel lock member to sink toward the center of the cylindrical axle in the radial direction.
(13) An electric wheelchair proposed in the present disclosure includes the wheel according to any one of (1) to (12).

### BRIEF DESCRIPTION OF THE DRAWINGS

FIG. 1 is a side view of an electric wheelchair;
FIG. 2 is a cross-sectional view of a wheel taken along the line II-II in FIG. 1;
FIG. 3A is an exploded perspective view of a main part of the wheel;
FIG. 3B is an enlarged view of an operating rod shown in FIG. 3A;
FIG. 4A is a perspective view of a stopper member;
FIG. 4B is a side view of the stopper member;
FIG. 5 is a cross-sectional view of the operating rod, a wheel lock member, and the stopper member, illustrating the movements thereof. In FIG. 5(a), the operating rod is disposed in a wheel lock position. In FIG. 5(b), the operating rod is disposed in a wheel lock release position;
FIG. 6 is a cross-sectional view of the operating rod, the wheel lock member, and the stopper member, illustrating the movements thereof. In FIG. 6(a), the operating rod is disposed in a first position, which is a part of the wheel lock release position. In FIG. 6(b), the operating rod is disposed in a second position, which is another part of the wheel lock release position;
FIG. 7 is a diagram illustrating operations performed by an operator when removing an axle from a cylindrical support portion fixed to a frame and the movements of each portion;
FIG. 8 is an enlarged view of FIG. 7; and
FIG. 9 is a diagram illustrating operations performed by the operator when attaching the axle to the cylindrical support portion fixed to the frame and the movements of each portion.

### DESCRIPTION OF THE EMBODIMENTS

The present disclosure is to be considered as an exemplification of the invention.

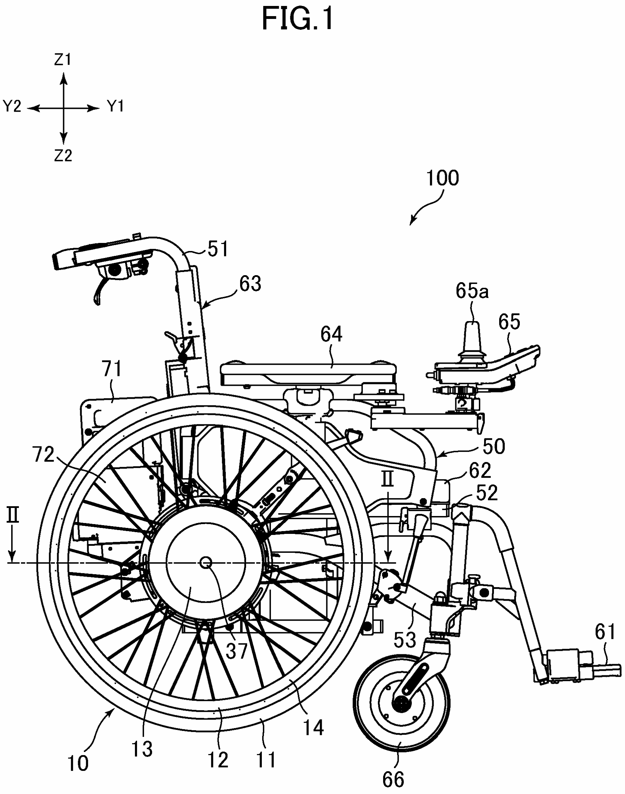

An electric wheelchair and a wheel of the electric wheelchair proposed in this disclosure will be described below. FIG. 1 is a side view of an electric wheelchair 100, which is an example of the electric wheelchair proposed in this disclosure.

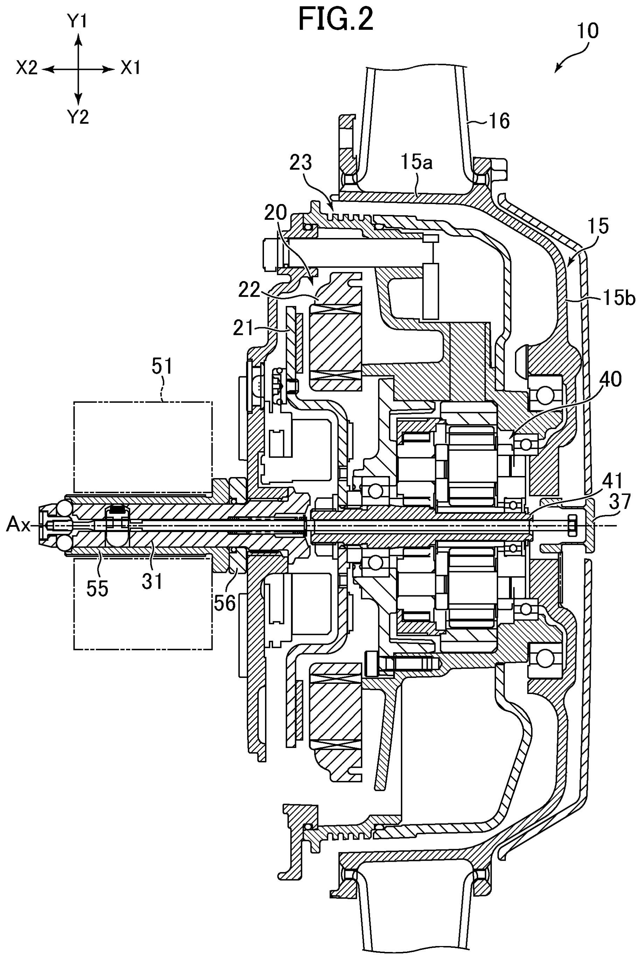

In the following, Z1 direction and Z2 direction shown in FIG. 1 will be referred to as an upward direction and a downward direction, respectively. Y1 direction and Y2 direction shown in FIG. 1 are referred to as a forward direction and a rearward direction, respectively. X1 direction and X2 direction shown in FIG. 2 are referred to as a right direction and a left direction, respectively. X1-X2 direction shown in FIG. 2 is a direction along an axis Ax of an axle 31 of the wheel 10. The direction along the axis Ax is referred to as an "axial direction."

As shown in FIG. 1, the electric wheelchair 100 includes wheels 10 respectively disposed on the right and left parts of the vehicle body. Tires 11 are attached to the outer peripheries of the wheels 10. The wheel 10 includes a hand rim 12 disposed along the tire 11 and a cover 13 for covering an electric motor 20, which will be described later. The electric wheelchair 100 includes a battery 71 for storing power to be supplied to the electric motor 20, and a battery holder 72 for holding the battery 71.

As shown in FIG. 1, the electric wheelchair 100 includes casters 66 positioned in front of the wheels 10, a foot support 61 for a user to put their feet, a seat 62 on which the user sits, a back support 63 for supporting the user's back, and arm supports 64 for the user to put their arms. An operation unit 65 that receives an operation of the user is disposed in front of the arm support 64. The user can input instructions on the direction and speed of the wheelchair 100 using the operation unit 65. The operation unit 65 includes a joystick 65a, for example. The operation unit 65 may include a power switch and a switch for adjusting the maximum speed, for example.

As shown in FIG. 1, the electric wheelchair 100 includes a frame 50. The frame 50 includes rear frame portions 51 respectively disposed on the right and left sides of the vehicle body and extending in the vertical direction. The rear frame portions 51 support the right and left parts of the back support 63. The frame 50 may also include a seat frame portion 52 that supports the right and left parts of the seat 62, and a lower frame portion 53 that is disposed below the seat frame portion 52 and supports the casters 66.

Hereinafter, the wheels 10 will be described. As described above, the electric wheelchair 100 includes two wheels 10 respectively disposed on the left and right parts of the vehicle body. In this specification, referring to FIGs. 2 to 9, the wheel 10 disposed on the right side will be mainly described. The left and right wheels 10 may have symmetrical structures.

### [Wheel]

As shown in FIG. 2, the wheel 10 includes an axle 31, a rotation shaft 41, an electric motor 20, and a reduction mechanism 40.

As shown in FIG. 2, the body of the electric wheelchair 100 includes a support portion 55 for supporting the wheel 10. The support portion 55 is cylindrical. The axle 31 is inserted into the support portion 55. The axle 31 is inserted into the support portion 55 from the outside of the vehicle body in the left-right direction. That is, the axle 31 of the right wheel 10 is inserted into the support portion 55 from the right side of the vehicle body. In contrast, the axle 31 of the left wheel 10 is inserted into the support portion 55 from the left side of the vehicle body.

The support portion 55 is fixed to the frame 50. The support portion 55 is fixed to the lower part of the rear frame portion 51, for example. A screw hole penetrating the rear frame portion 51 in the axial direction (X1-X2 direction) may be formed in the lower part of the rear frame portion 51. The support portion 55 may be inserted into such a screw hole. In this case, a screw may be formed on the outer peripheral surface of the support portion 55. A washer 56 may be disposed at the end (outer end in the left-right direction) of the support portion 55.

The support portion 55 is not limited to being fixed to the rear frame portion 51. For example, the support portion 55 may be fixed to the rear part of the lower frame portion 53.

As shown in FIG. 2, the electric motor 20 includes a rotor 21 that is rotatable around the axis Ax of the axle 31 and a stator 22. The rotor 21 and the stator 22 face each other in the axial direction, for example. The rotor 21 includes a permanent magnet, for example, and the stator 22 includes a coil.

As shown in FIG. 2, a through hole is formed at the center of the rotor 21. The rotation shaft 41 is inserted into the through hole. The inner peripheral surface of the through hole engages with the outer peripheral surface of the rotation shaft 41, and the rotor 21 and the rotation shaft 41 can thereby rotate integrally. The wheel 10 includes a hub 15 (see FIG. 2) that is coupled to a rim 14 (see FIG. 1) via spokes 16. The rotation of the rotation shaft 41 is transmitted to the hub 15 via the reduction mechanism 40. The reduction mechanism 40 is a double planetary gear mechanism, for example.

As shown in FIG. 2, the electric motor 20 includes a motor housing 23. The rotor 21 and stator 22 described above are disposed inside the motor housing 23. The hub 15 includes an outer circumferential part 15a, which is positioned radially outward of the motor housing 23 and surrounds the motor housing 23, and a side part 15b, which is positioned outward of the motor housing 23 in the left-right direction. An operating button 37 may be disposed in the through hole formed in the center of the side part 15b. As described below, an operator presses the operating button 37 and can thereby remove the wheel 10 from the vehicle body.

### [Wheel attachment/detachment structure]

The wheel 10 is attachable to and detachable from the vehicle body of the electric wheelchair 100. More specifically, the axle 31 of the wheel 10 is attachable to and detachable from the support portion 55 fixed to the frame 50.

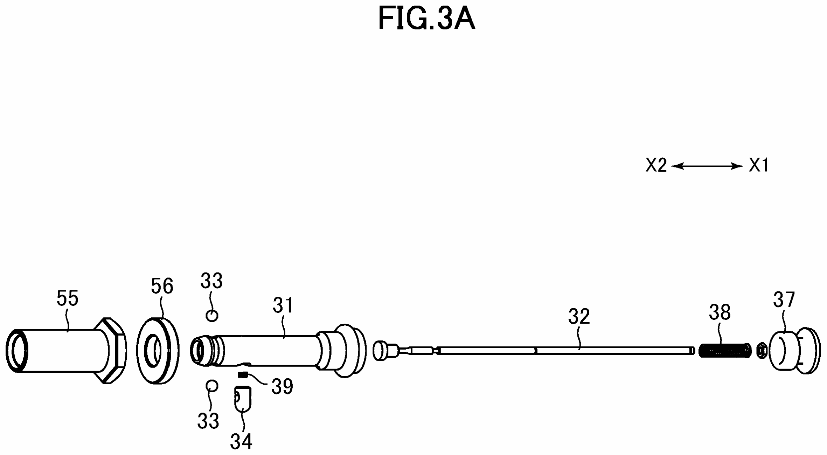

As shown in FIG. 3A, the axle 31 is formed in a cylindrical shape. The wheel 10 includes an operating rod 32 inserted in the axle 31 and wheel lock members 33. The wheel lock members 33 fix the axle 31 to the support portion 55, that is, prevent the axle 31 from coming off the support portion 55. The operating button 37 (see FIG. 2) mentioned above is attached to the base of the operating rod 32.

### [Wheel lock member]

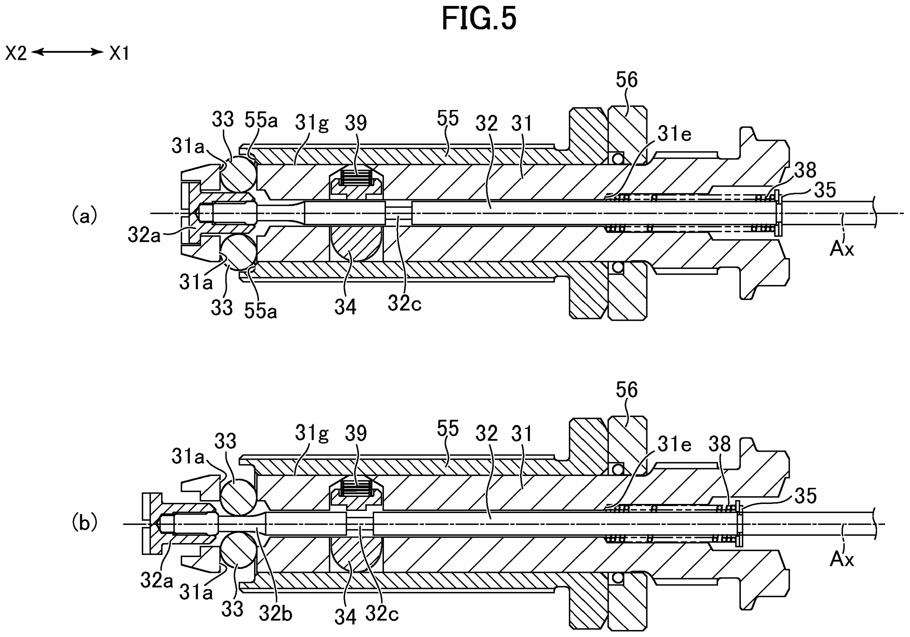

The wheel lock member 33 is a ball, for example. As shown in FIG. 5(a), the wheel 10 includes two wheel lock members 33 disposed on opposite sides of the axis Ax, for example. An accommodation hole 31a is formed in the axle 31 so as to pass through the axle 31 in the radial direction of the axle 31. The wheel lock member 33 is disposed inside the accommodation hole 31a. The wheel lock member 33 is movable in the radial direction of the axle 31 (direction perpendicular to X1-X2 direction in FIG. 5) inside the accommodation hole 31a. Specifically, the wheel lock member 33 is movable between an engaging position shown in FIG. 5(a) and a releasing position shown in FIG. 5(b).

When the wheel lock member 33 is in the engaging position, the wheel lock member 33 engages with the support portion 55. As shown in FIG. 5(a), when the wheel lock member 33 is in the engaging position, a part of the wheel lock member 33 protrudes radially outward from the outer peripheral surface 31g of the axle 31. As such, the distance from the axis Ax to such a part of the wheel lock member 33 is longer than the outer diameter (radius) of the outer peripheral surface of the axle 31. The part of the wheel lock member 33 then engages with the support portion 55. This prevents the axle 31 from coming off the support portion 55.

The wheel lock member 33 is hooked to an inner end 55a of the support portion 55 (the end close to the center of the electric wheelchair 100 in the left-right direction), for example. This prevents the axle 31 from coming off the support portion 55. The position to which the wheel lock member 33 is hooked may not be the inner end 55a of the support portion 55. For example, a hole may be formed in the inner peripheral surface of the cylindrical support portion 55, and a part of the wheel lock member 33 may be engaged with such a hole.

As shown in FIG. 5(b), when the wheel lock member 33 is in the release position, the wheel lock member 33 does not engage with the support portion 55. In other words, when the wheel lock member 33 is in the release position, the engagement between the wheel lock member 33 and the support portion 55 is released. Movement (sinking) of the wheel lock member 33 toward the axis Ax of the axle 31 is permitted by a small diameter part 32b, which will be described later, of the operating rod 32. This enables the entire wheel lock member 33 to be accommodated inside the outer peripheral surface 31g of the axle 31. This allows the axle 31 to come off the support portion 55.

The shape of the wheel lock member 33 is not limited to a ball. The wheel lock member 33 may have any shape if the wheel lock member 33 is shaped to prevent the axle 31 from coming off the support portion 55. The number of wheel lock members 33 may be one or more than two.

### [Operating rod]

The operating rod 32 is movable relative to the axle 31 in the axial direction. The operating rod 32 is movable between a wheel lock position (FIG. 5(a)), in which the wheel lock member 33 is positioned at an engaging position, and a wheel lock release position (FIG. 5(b)), in which the wheel lock member 33 is allowed to move to the release position. The operating rod 32 is biased outward in the left-right direction by a first elastic member 38 (see FIG. 3A). When the operator presses an operating button 37 (see FIG. 2) from the outside of the left-right direction, the operating rod 32 moves from the wheel lock position (FIG. 5(a)) to the wheel lock release position (FIG. 5(b)) .

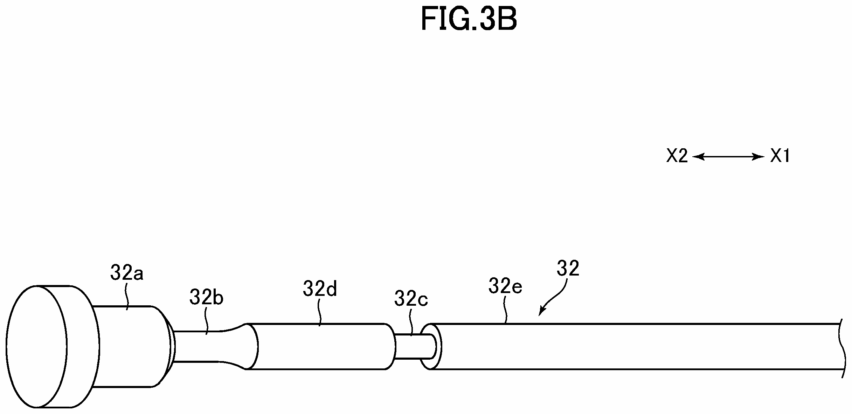

As shown in FIG. 3B, the operating rod 32 includes a large diameter part 32a at its tip, here the inside tip. The operating rod 32 also includes the small diameter part 32b, which is smaller in size than the large diameter part 32a in the radial direction. The small diameter part 32b is positioned closer to the base (operating button 37) of the operating rod 32.

As shown in FIG. 5(a), when the operating rod 32 is in the wheel lock position, the position of the large diameter part 32a coincides with the position of the accommodation hole 31a in which the wheel lock member 33 is disposed. The large diameter part 32a pushes the wheel lock member 33 radially outward of the axle 31, thereby preventing the wheel lock member 33 from moving (sinking) toward the axis Ax (the center of the axle 31 in the radial direction).

On the other hand, as shown in FIG. 5(b), when the operating rod 32 is in the wheel lock release position, the position of the small diameter part 32b coincides with the position of the accommodation hole 31a in which the wheel lock member 33 is disposed. The small diameter part 32b allows the wheel lock member 33 to move (sink) toward the axis Ax (the center of the axle 31 in the radial direction). In this manner, the wheel lock member 33 can be placed in the release position.

As shown in FIG. 3B, both the large diameter part 32a and the small diameter part 32b are cylindrical. The shapes of the large diameter part 32a and the small diameter part 32b are not limited to this. The large diameter part 32a may not be cylindrical in shape if it has a shape that prevents the wheel lock member 33 from moving (sinking) toward the axis Ax. For example, the large diameter part 32a may be a protrusion that protrudes toward the inside of the accommodation hole 31a. Further, the small diameter part 32b may not be cylindrical if it has a shape that allows the movement (sinking) of the wheel lock member 33 toward the axis Ax. For example, the small diameter part 32b may be a recess formed on the outer peripheral surface of the operating rod 32.

### [First elastic member]

As described above, the wheel 10 includes the first elastic member 38 (see FIG. 3A). The first elastic member 38 biases the operating rod 32 outward in the left-right direction. In other words, the first elastic member 38 biases the operating rod 32 in a direction from the wheel lock release position toward the wheel lock position. In FIG. 5, the first elastic member 38 pushes the operating rod 32 to the right.

The first elastic member 38 is a coil spring, for example. As shown in FIG. 5(a), the operating rod 32 is inserted in the first elastic member 38. The first elastic member 38 is inserted into the axle 31 together with the operating rod 32. One end of the first elastic member 38 is supported by a receiving surface 31e formed on the inner peripheral surface of the axle 31. The other end of the first elastic member 38 is supported by a stopper ring 35 attached to the operating rod 32. The first elastic member 38 pushes the stopper ring 35 outward in the left-right direction.

Other members of the wheel 10 restrict the movement of the stopper ring 35 to the right direction, i.e., outward in the left-right direction. For example, the rotation shaft 41 (see FIG. 2) that is coaxially arranged with the axle 31 may restrict the movement of the stopper ring 35 to the right direction.

### [Stopper member]

As shown in FIG. 3A, the wheel 10 includes a stopper member 34. The stopper member 34 engages with the operating rod 32 when the operating rod 32 is positioned in the wheel lock release position. The stopper member 34 retains the operating rod 32 at the wheel lock release position against the elastic force of the first elastic member 38.

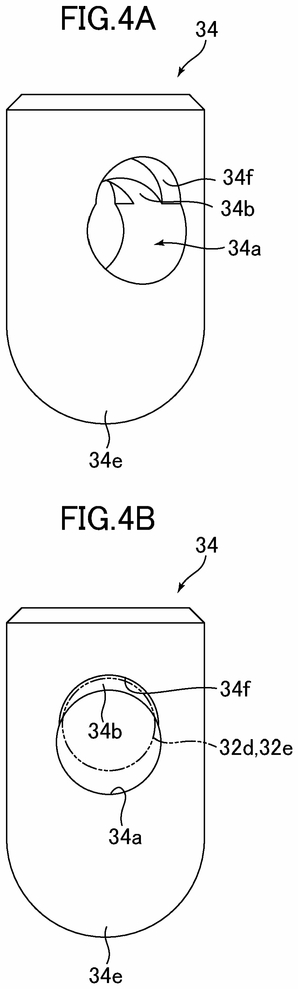

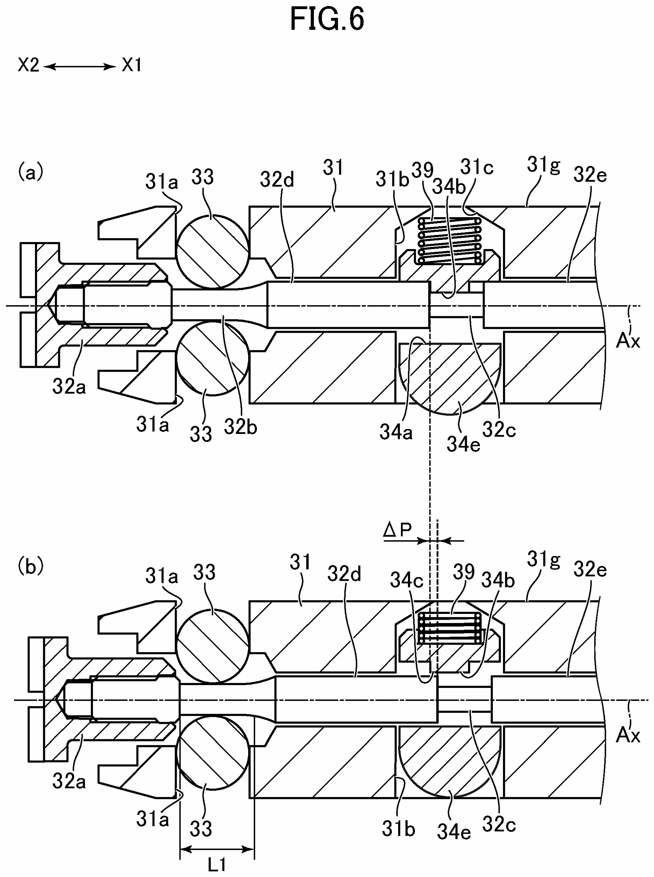

As shown in FIG. 4A, a through hole 34a, which passes through the stopper member 34 in the axial direction, is formed in the stopper member 34. The operating rod 32 is inserted into the through hole 34a. An engagement part 34b (see FIG. 4A) is formed on the inside of the through hole 34a. The engagement part 34b is a protrusion that protrudes toward the inside of the through hole 34a, for example. A stopper engagement part 32c (see FIG. 3B) is formed on the operating rod 32. The stopper engagement part 32c is thinner (has a smaller diameter) than other parts of the operating rod 32, for example. As shown in FIG. 6(a), the engagement part 34b fits in the stopper engagement part 32c to retain the operating rod 32 at the wheel lock release position. That is, the engagement part 34b prevents the movement of the operating rod 32 from the wheel lock release position to the wheel lock position.

As shown in FIG. 3B, the operating rod 32 includes a recess, which is the stopper engagement part 32c, formed around the entire outer peripheral surface of the operating rod 32. Alternatively, the stopper engagement part 32c may be a recess or a hole formed in a part of the outer peripheral surface of the operating rod 32.

The structures of the stopper member 34 and the stopper engagement part 32c are not limited to the example described here. For example, in contrast to the example shown in FIG. 4A, a through hole may be formed in the operating rod 32, and the stopper member 34 may be fitted into such a through hole. The stopper engagement part 32c may be formed in the through hole.

### [Operation procedure by operator and movement of operating rod]

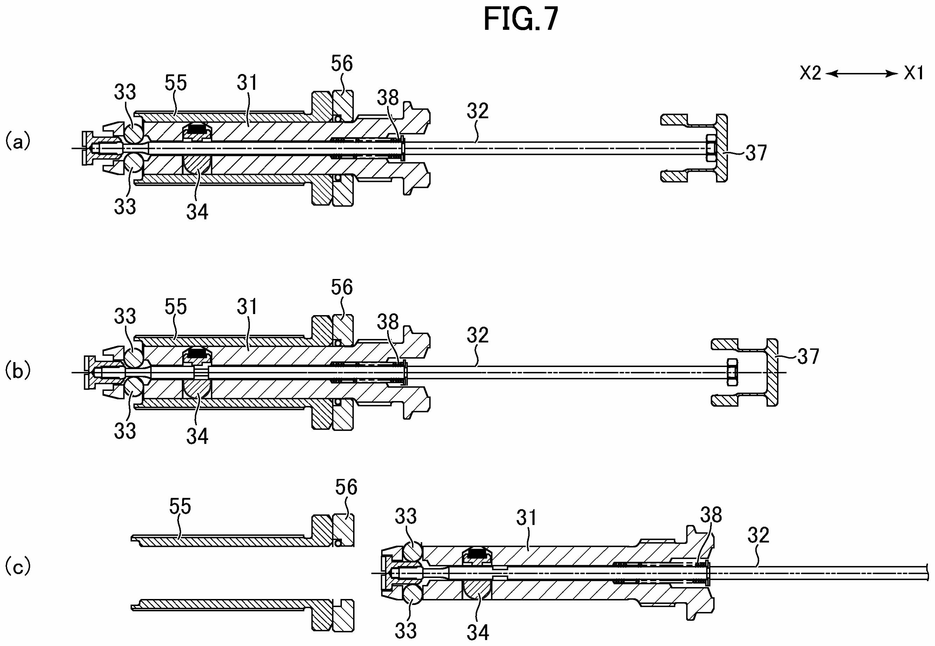

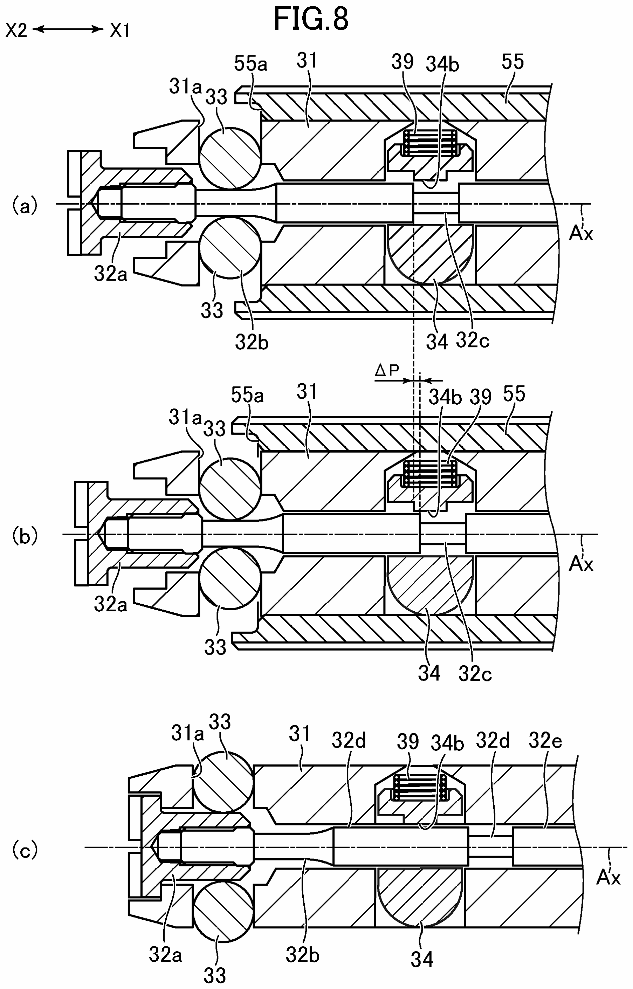

Referring to FIGs. 7 and 8, the operations performed by the operator when removing the wheel 10 from the vehicle body will be described. FIGs. 8(a), 8(b), and 8(c) are enlarged views of FIGs. 7(a), 7(b), and 7(c), respectively.

As shown in FIG. 5(a), in the initial state (when the axle 31 is fitted into the support portion 55), the operating rod 32 is in the wheel lock position, and the wheel lock member 33 is in the engaging position. As shown in FIG. 7(a), the operator pushes the operating rod 32 (more specifically, the operating button 37) toward the center in the left-right direction against the elastic force of the elastic member 38. As shown in FIG. 8(a), the operating rod 32 is thereby disposed in the wheel lock release position, and the wheel lock member 33 is allowed to be in, in particular move toward, the release position (to sink toward the axis Ax).

Subsequently, as shown in FIG. 7(b), the operator stops pushing the operating rod 32. As shown in FIG. 7(c), the axle 31 is then pulled out from the support portion 55. At this time, the operator separates the electric motor 20, the hub 15, and the rotation shaft 41 together with the axle 31 from the frame 50.

As shown in FIGs. 8(a) and 8(b), when the axle 31 is inside the support portion 55, the stopper function of the stopper member 34 described above does not work even if the operating rod 32 is disposed in the wheel lock release position. That is, the engagement part 34b of the stopper member 34 does not engage with the stopper engagement part 32c of the operating rod 32. As such, as shown in FIGs. 7(c) and 8(c), when the axle 31 is completely pulled out from the support portion 55, the operating rod 32 automatically returns to the wheel lock position due to the elastic force of the first elastic member 38. The structure that causes such movement of the wheel 10 will be described in detail later.

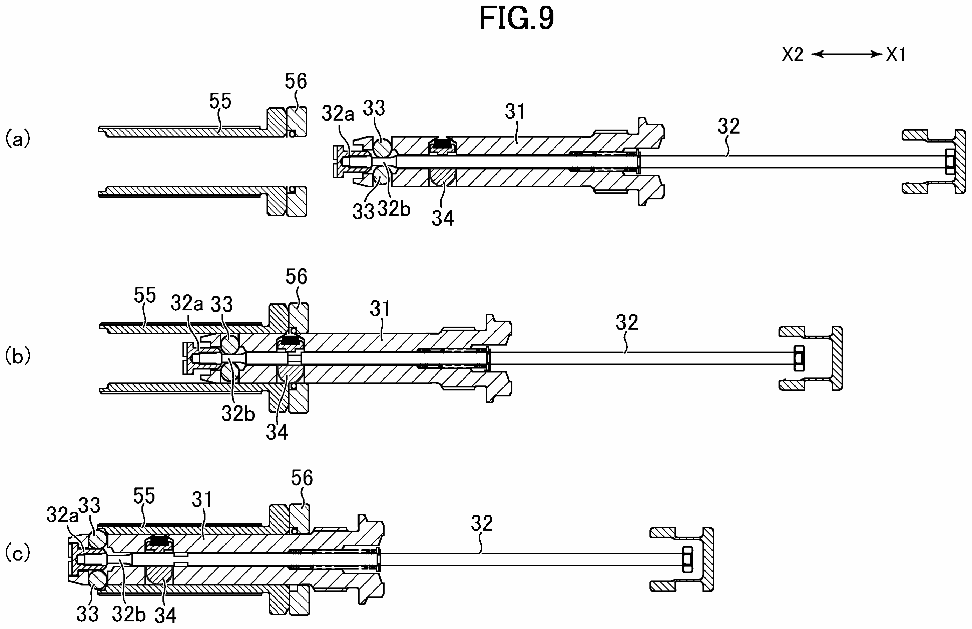

Referring to FIG. 9, the operations performed by the operator when attaching the wheel 10 to the vehicle body will be described.

In the initial state (when the entire axle 31 is outside the support portion 55), the operating rod 32 is disposed in the wheel lock position. As shown in FIG. 8(c), the wheel lock member 33 is therefore in the engaging position. The operator pushes the operating rod 32 (more specifically, the operating button 37) against the elastic force of the first elastic member 38 to place the operating rod 32 in the wheel lock release position (FIG. 9(a)). This allows the wheel lock member 33 to be in, in particular move to, the release position. At this time, the stopper member 34 described above operates. As such, even if the operator stops pushing the operating rod 32, the position of the operating rod 32 is maintained in the wheel lock release position.

Subsequently, as shown in FIG. 9(b), the operator inserts the axle 31 into the support portion 55. As will be described later, in the process of inserting the axle 31 into the support portion 55, the stopper function of the stopper member 34 is automatically released. Accordingly, as shown in FIG. 9(c), when the axle 31 is fully inserted into the support portion 55, the elastic force of the first elastic member 38 causes the operating rod 32 to move from the wheel lock release position to the wheel lock position. As shown in FIG. 5(a), the wheel lock member 33 is pushed outward in the radial direction by the large diameter part 32a of the operating rod 32 and engages with the inner end 55a of the support portion 55. In other words, the wheel 10 is fixed to the support portion 55.

In this manner, when the operator attaches the wheel 10 to the frame 50 (support portion 55), the stopper member 34 operates to temporarily retain the operating rod 32 at the wheel lock release position. This allows the operator to stop pushing the operating rod 32. As such, the operator can fit the axle 31 into the support portion 55 while holding the wheel 10 with both hands. This facilitates the attachment of the wheel 10 to the frame 50.

In the electric wheelchair 100, the position of the motor housing 23 in the rotational direction of the wheel 10, more specifically, the position of the motor housing 23 relative to the frame 50 in the rotational direction, may be determined in advance. For example, a recess (or a protrusion) formed on the frame 50 and a protrusion (or a recess) formed on the motor housing 23 may be engaged with each other. The position of the motor housing 23 in the rotation direction of the wheel 10 may be determined by these recess and protrusion. The wheel 10 includes the stopper member 34, and thus the operator can stop pushing the operating rod 32, and while holding the wheel 10 with both hands, adjust the position of the motor housing 23 in the rotational direction and then insert the axle 31 into the support portion 55.

### [Movement of stopper member]

As shown in FIG. 6(a), the axle 31 has an accommodation hole 31b formed therein to intersect with the axis Ax. The stopper member 34 is disposed in the accommodation hole 31 b and movable in the radial direction of the axle 31. Specifically, the stopper member 34 is movable inside the accommodation hole 31b between the "stopper position" shown in FIG. 6(a) and the "stopper release position" shown in FIG. 6(b).

The stopper position is a position where the stopper member 34 engages with the stopper engagement part 32c of the operating rod 32. That is, when the stopper member 34 is in the stopper position, the engagement part 34b engages with the stopper engagement part 32c. The position of the operating rod 32 is maintained in the wheel lock release position.

On the other hand, the stopper release position is a position where the stopper member 34 does not engage with the stopper engagement part 32c, in other words, a position where the engagement between them is released. When the stopper member 34 is in the stopper release position, the engagement part 34b is not engaged with the stopper engagement part 32c. As such, the operating rod 32 is allowed to move from the wheel lock release position to the wheel lock position.

As shown in FIG. 6(a), a second elastic member 39 is disposed in the accommodation hole 31b of the axle 31. The second elastic member 39 biases the stopper member 34 toward the stopper position (position shown in FIG. 6(a)). As such, in a state where the axle 31 is outside the support portion 55 and the operating rod 32 moves to the wheel lock release position (more specifically, "first position" described later), the stopper member 34 engages with the stopper engagement part 32c due to the elastic force of the second elastic member 39.

The second elastic member 39 is a coil spring, for example. The second elastic member 39 is extendable in the radial direction of the axle 31. The second elastic member 39 is disposed between the base of the stopper member 34 (the part opposite to an interference part 34e described later) and a bottom part 31c of the accommodation hole 31b.

### [Interference part of stopper member]

As shown in FIG. 6(a), the stopper member 34 includes an interference part 34e at its tip. The interference part 34e protrudes from the outer peripheral surface 31g of the axle 31 when the stopper member 34 is in the stopper position. That is, the distance between the tip of the stopper member 34 (tip of the interference part 34e) and the axis Ax is longer than the distance between the axis Ax and the outer peripheral surface 31g of the axle 31.

On the other hand, as shown in FIG. 6(b), when the stopper member 34 is in the stopper release position, the entire stopper member 34 including the interference part 34e is accommodated in the accommodation hole 31b. That is, the distance between the tip of the stopper member 34 (tip of the interference part 34e) and the axis Ax is substantially the same as the distance between the axis Ax and the outer peripheral surface 31g of the axle 31.

When the stopper member 34 is in the stopper position, the engagement part 34b engages with the stopper engagement part 32c of the operating rod 32, and the position of the operating rod 32 is maintained in the wheel lock release position ("first position" described later). At this time, the interference part 34e protrudes from the outer peripheral surface 31g of the axle 31. As such, in the process of inserting the axle 31 into the support portion 55 as shown in FIG. 9(b), the interference part 34e interferes with the support portion 55. The stopper member 34 is then pushed by the inner peripheral surface of the support portion 55 against the elastic force of the second elastic member 39, and moves from the stopper position to the stopper release position.

As described above, the washer 56 may be disposed at the end (entrance) of the support portion 55. In this case, in the process of inserting the axle 31 into the support portion 55, the interference part 34e first interferes with the washer 56, and the stopper member 34 moves to the stopper release position.

In this manner, the operating rod 32 retained at the wheel lock release position by the stopper member 34 is automatically released. In other words, the operating rod 32 is released from the wheel lock release position without the operation of the operator to move the stopper member 34.

As shown in FIG. 9(b), when the wheel lock member 33 is positioned inside the support portion 55, the wheel lock member 33 remains at the small diameter part 32b of the operating rod 32. As such, in this state, the wheel lock member 33 prevents the movement of the operating rod 32 to the wheel lock position due to the elastic force of the first elastic member 38. As shown in FIG. 9(c), when the axle 31 is completely fitted into the support portion 55, that is, when the wheel lock member 33 passes the position of the inner end 55a of the support portion 55, the operating rod 32 moves to the wheel lock position. The wheel lock member 33 is pushed by the large diameter part 32a to move to the engaging position, and engages with the inner end 55a of the support portion 55.

As shown in FIGs. 4A and 4B, the interference part 34e of the stopper member 34 may be hemispherical, for example. With such a shape of the stopper member 34, when the axle 31 is inserted into the support portion 55 and the interference part 34e hits the washer 56, a force to return the stopper member 34 to the stopper position (force acting in the radial direction of the axle 31) is generated. Further, in the process of removing the axle 31 from the support portion 55 and inserting the axle 31 into the support portion 55, the friction acting between the interference part 34e and the inner surface of the support portion 55 can be reduced.

The shape of the stopper member 34 is not limited to the example shown in FIG. 4A, for example. The tip of the stopper member 34 may include a slope, for example. In the process of inserting the axle 31 into the support portion 55, such a slope may contact with the washer 56, thereby generating a force to return the stopper member 34 to the stopper position.

### [First position and second position as part of wheel lock release position]

As described above, when the axle 31 is inside the support portion 55, the stopper function (engagement with the operating rod 32) of the stopper member 34 does not function. The structure for this purpose will be described below.

As described above, when the operating rod 32 is in the wheel lock release position, the position of the small diameter part 32b coincides with the accommodation hole 31a in which the wheel lock member 33 is disposed. The wheel lock release position includes a first position of the operating rod 32 shown in FIG. 6(a) and a second position of the operating rod 32 shown in FIG. 6(b). The first position is a position where the operating rod 32 is pushed deepest into the axle 31, for example. The second position is a position slightly returning backward from the first position toward the wheel lock position. As shown in FIGs. 6(a) and 6(b), the first position and the second position are apart from each other by a distance ΔP. The operating rod 32 is biased from the first position toward the second position by the first elastic member 38.

As shown in FIGs. 6(a) and 6(b), when the operating rod 32 is in either the first position or the second position, the position of the small diameter part 32b of the operating rod 32 coincides with the position of the accommodation hole 31a. As such, in either state, the wheel lock member 33 is allowed to move from the engaging position to the release position. A certain amount of play is provided in a size L1 (see FIG. 6(b)) of the small diameter part 32b in the axial direction so that the operating rod 32 can move between the first position and the second position.

As shown in FIG. 6(a), when the operating rod 32 is in the first position, the position of the stopper engagement part 32c of the operating rod 32 coincides with the position of the stopper member 34 (more specifically, the position of the engagement part 34b). As shown in FIG. 6(a), therefore, when the axle 31 is outside the support portion 55 and the operating rod 32 is pushed to the first position, the stopper member 34 moves to the stopper position and engages with the stopper engagement part 32c. That is, the engagement part 34b engages with the stopper engagement part 32c. In this manner, the operating rod 32 is retained at the first position.

On the other hand, when the operating rod 32 is in the second position, as shown in FIG. 6(b), the position of the stopper engagement part 32c is apart from the position of the stopper member 34 (more specifically, the position of the engagement part 34b). As such, the stopper member 34 remains in the stopper release position and does not engage with the stopper engagement part 32c. That is, the engagement part 34b does not engage with the stopper engagement part 32c. As shown in FIG. 6(b), a part 34c of the engagement part 34b of the stopper member 34 hits against the outer peripheral surface 32d of the portion between the stopper engagement part 32c and the small diameter part 32b. As such, the operating rod 32 is not retained at the second position and allowed to move to the wheel lock position due to the elastic force of the first elastic member 38.

### [Movement of stopper member when axle is inside support portion]

As described above, the stopper member 34 includes the interference part 34e (see FIG. 6(a)) at its tip. As shown in FIG. 8(a), when the stopper member 34 is inside the support portion 55, the interference part 34e interferes with the inner peripheral surface of the support portion 55. As such, in this state, the stopper member 34 is not allowed to move to the stopper position. Accordingly, when the stopper member 34 is inside the support portion 55, the operating rod 32 is not retained at the first position, but as shown in FIG. 8(b), moves to the second position due to the elastic force of the first elastic member 38.

When the operating rod 32 is in the second position, the stopper member 34 remains in the stopper release position and does not engage with the stopper engagement part 32c. As such, as shown in FIGs. 7(c) and 8(c), when the axle 31 comes out of the support portion 55, the operating rod 32 automatically moves from the wheel lock release position to the wheel lock position due to the elastic force of the first elastic member 38. In other words, the operating rod 32 moves to the wheel lock position without any special operation of the operator to return the operating rod 32 to the wheel lock position. The wheel lock member 33 is then disposed in the engaging position, and a part of the wheel lock member 33 protrudes from the outer peripheral surface 31g of the axle 31.

If the axle 31 is inserted back into the support portion 55 before being completely removed from the support portion 55, the operating rod 32 automatically returns from the wheel lock release position to the wheel lock position, and the wheel lock member 33 engages with the support portion 55. In other words, the axle 31 is prevented from being separated from the support portion 55.

### [Engagement part of stopper member]

As shown in FIG. 4A, the engagement part 34b is formed only in a part of the through hole 34a formed in the stopper member 34. In other words, the width of the engagement part 34b in the axial direction is smaller than the width of the stopper member 34 in the axial direction. As such, the stopper member 34 includes a guide surface 34f, on the inner surface of the through hole 34a, adjacent to the engagement part 34b. The guide surface 34f is curved and, as shown in FIGs. 6(a) and 4B, disposed along the outer peripheral surfaces 32d and 32e of the operating rod 32 when the engagement part 34b is engaged with the stopper engagement part 32c. When the stopper member 34 is in the stopper position, the guide surface 34f may be in contact with the outer peripheral surfaces 32d and 32e of the operating rod 32. The stopper engagement part 32c is formed between the outer peripheral surfaces 32d and 32e. Such structures of the stopper member 34 and the operating rod 32 serve to optimize the attitude of the stopper member 34 when the stopper member 34 is in the stopper position.

If the guide surface 34f is not formed on the inner surface of the through hole 34a, the stopper engagement part 32c is thinner than the diameter of the through hole 34a, and thus the attitude of the stopper member 34 inside the accommodation hole 31b may change in an unintended direction. For example, the stopper member 34 can rotate about the center line perpendicular to the axis Ax. When the stopper member 34 is rotating in this manner, even if the stopper member 34 moves from the stopper position to the stopper release position, the edge of the through hole 34a of the stopper member 34 may possibly continue to be hooked to the edge of the stopper engagement part 32c (recess). In this case, the operating rod 32 cannot return to the wheel lock position from the wheel lock release position.

In contrast, in the wheel 10, as shown in FIG. 4B, when the engagement part 34b is engaged with the stopper engagement part 32c, the guide surface 34f is disposed along the outer peripheral surfaces 32d and 32e of the operating rod 32. This optimizes the attitude of the stopper member 34 in the accommodation hole 31b. As such, when the stopper member 34 moves from the stopper position to the stopper release position, the engagement between the stopper member 34 and the stopper engagement part 32c is immediately released. This enables the operating rod 32 to more reliably return to the wheel lock position from the wheel lock release position.

The stopper member 34 does not necessarily include the engagement part 34b that protrudes inwardly of the through hole 34a. In this case, the inner surface of the through hole 34a may function as an engagement part that engages with the stopper engagement part 32c.

### [Summary]

(1) As described above, the wheel 10 includes the axle 31 to be fitted into the support portion 55 provided in the vehicle body, the operating rod 32 that is inserted in the axle 31, the first elastic member 38, the wheel lock member 33 that is movable in a radial direction of the axle 31 between an engaging position (FIG. 5(a)), in which the wheel lock member 33 engages with the support portion 55 and a release position (FIG. 5(b)), in which the wheel lock member 33 does not engage with the support portion 55, and the stopper member 34. The operating rod 32 is movable in an axial direction relative to the axle 31 between a wheel lock position (FIG. 5(a)), in which the wheel lock member 33 is positioned in the engaging position, and a wheel lock release position (FIG. 5(b)), in which the wheel lock member 33 is allowed to move to the release position. The operating rod 32 is pushed from the wheel lock release position toward the wheel lock position by an elastic force of the first elastic member 38 and is movable from the wheel lock position to the wheel lock release position by a pushing force applied by a user. The stopper member 34 engages with the operating rod 32 when the operating rod 32 is positioned in the wheel lock release position and retains the operating rod 32 in the wheel lock release position against the elastic force of the first elastic member 38.
   With the wheel 10, when the operator attaches the wheel 10 to the frame 50, the stopper member 34 operates to temporarily retain the operating rod 32 in the wheel lock release position, and the operator can thereby stop pushing the operating rod 32. As such, the operator can fit the axle 31 into the support portion 55 while holding the wheel 10 with both hands. This facilitates the attachment of the wheel 10 to the frame 50.
(2) In the wheel 10 of (1), the stopper member 34 is disposed in an accommodation hole 31b formed in the axle 31 and is movable inside the accommodation hole 31b in the radial direction of the axle 31. A stopper engagement part 32c is formed on the operating rod 32. When the operating rod 32 is in the wheel lock release position, the stopper member 34 engages with the stopper engagement part 32c to retain the operating rod 32 in the wheel lock release position.
(3) In the wheel 10 of (2), a through hole 34a, which passes through the stopper member 34 in the axial direction, is formed in the stopper member 34. The operating rod 32 extends through the through hole 34a in the axial direction. The stopper member 34 includes an engagement part 34b inside the through hole 34a to engage with the stopper engagement part 32c. The through hole 34a is formed in the stopper member 34 in this manner, and thus a rod with a small diameter can be used as the operating rod 32.
(4) In the wheel 10 of any one of (1) to (3), in a state where the operating rod 32 is in the wheel lock release position and the axle 31 is inside the support portion 55, the stopper member 34 does not engage with the stopper engagement part 32c. This structure can prevent the position of the operating rod 32 from being retained in the wheel lock release position without the operator's intention. For example, when the axle 31 is inserted back into the support portion 55 before being completely removed from the support portion 55, the position of the operating rod 32 is not retained in the wheel lock release position, and the operating rod 32 can automatically return to the wheel lock position.
(5) In the wheel 10 of any one of (2) to (4), the wheel lock release position includes a first position (FIG. 6(a)) and a second position (FIG. 6(b)) that is closer to the wheel lock position than the first position. The operating rod 32 is pushed from the first position toward the second position by the first elastic member 38. When the operating rod 32 is in the first position, the operating rod 32 allows the wheel lock member 33 to move to the release position and the stopper member 34 engages with the stopper engagement part 32c to retain the operating rod 32 in the first position. When the operating rod 32 is in the second position, the operating rod 32 allows the wheel lock member 33 to move to the release position and the stopper member 34 does not engage with the stopper engagement part 32c. In this structure, the operating rod 32 is disposed in the second position, and the wheel lock member 33 is thereby allowed to move to the release position, while preventing the operating rod 32 from being retained in the wheel lock release position.
(6) In the wheel 10 of (5), when the stopper member 34 and the axle 31 are inside the support portion 55, the operating rod 32 is not retained in the first position and moves to the second position by the elastic force of the first elastic member 38. This structure can prevent the stopper member 34 from operating to retain the operating rod 32 in the wheel lock release position when the stopper member 34 and the axle 31 are inside the support portion 55.
(7) In the wheel 10 of (5) or (6), the stopper member 34 is movable in the radial direction of the axle 31 between a stopper position, in which the stopper member 34 engages with the stopper engagement part 32c to retain the operating rod 32 in the first position, and a stopper release position, in which the stopper member 34 and the stopper engagement part 32c are released from each other. The stopper member 34 is biased from the stopper release position to the stopper position by an elastic force of a second elastic member **39.** When the stopper member 34 and the axle 31 are inside the support portion **55, a** movement of the stopper member 34 from the stopper release position to the stopper position is prevented. This structure can prevent the stopper member 34 from operating to retain the operating rod 32 in the wheel lock release position when the stopper member 34 is inside the support portion 55. When the stopper member 34 is outside the support portion **55,** the stopper member 34 moves to the stopper position due to the elastic force of the second elastic member 39, and the position of the operating rod 32 can be thereby retained in the wheel lock release position.
(8) In the wheel 10 of (7), the stopper member 34 includes an interference part 34e that protrudes from an outer peripheral surface of the axle 31 when the stopper member 34 is in the stopper position. When the stopper member 34 and the axle 31 are inside the support portion **55,** the interference part 34e interferes with an inner peripheral surface of the support portion 55 to prevent the movement of the stopper member 34 from the stopper release position to the stopper position. This structure can prevent the stopper member 34 from operating to retain the operating rod 32 in the wheel lock release position when the stopper member 34 is inside the support portion 55. When the stopper member 34 is outside the support portion **55,** the stopper member 34 moves to the stopper position due to the elastic force of the second elastic member **39,** and the position of the operating rod 32 can be thereby retained in the wheel lock release position.
(9) In the wheel 10 of any one of (1) to (8), in a process in which the axle 31 is inserted into the support portion 55 while the operating rod 32 is in the wheel lock release position, the operating rod 32 is automatically released from the wheel lock release position. This structure further simplifies the operation of attaching the wheel 10 to the vehicle body.
(10) In the wheel 10 of any one of (2) to (8), the stopper member 34 is movable in the radial direction of the axle 31 between a stopper position, in which the stopper member 34 engages with the stopper engagement part 32c to retain the operating rod 32 in the wheel lock release position, and a stopper release position, in which the stopper member 34 and the stopper engagement part 32c are released from each other. The stopper member 34 includes an interference part 34e that protrudes from an outer peripheral surface 31g of the axle 31 when the stopper member 34 is in the stopper position. The interference part 34e is pushed by an inner peripheral surface of the support portion 55 and moves the stopper member 34 from the stopper position to the stopper release position. In this manner, when the axle 31 is inserted into the support portion 55, the operating rod 32 can automatically return to the wheel lock position.
(11) In the wheel 10 of any one of (1) to (10), when the operating rod 32 is in the wheel lock position, the operating rod 32 pushes the wheel lock member 33 outward of the axle 31 in the radial direction to bring the wheel lock member 33 into engagement with the support portion **55,** and when the operating rod 32 is in the wheel lock release position, the operating rod 32 allows the wheel lock member 33 to sink toward the center of the axle 31 in the radial direction.
(12) In the wheel 10 of (11), the operating rod 32 includes a large diameter part 32a and a small diameter part 32b that are away from each other in the axial direction. When the operating rod 32 is in the wheel lock position, the large diameter part 32a pushes the wheel lock member 33 outward of the axle 31 in the radial direction and restricts a movement of the wheel lock member 33 in the radial direction. When the operating rod 32 is in the wheel lock release position, the small diameter part 32b allows the wheel lock member 33 to sink toward the center of the axle 31 in the radial direction.

For example, the structure that prevents the stopper member 34 from engaging with the operating rod 32 when the axle 31 is fitted into the support portion 55 is not limited to the structure of the wheel 10 described above (specifically, the operating rod 32 positioned in the second position and the interference part 34e of the stopper member 34), and may be modified as appropriate.

Further, the structure in which the stopper member 34 automatically returns to the stopper release position when the axle 31 is fitted into the support portion 55 is not limited to the structure of the wheel 10 (specifically, the interference part 34e of the stopper member 34) and may be modified as appropriate. For example, a protrusion to push the stopper member 34 toward the stopper release position may be formed on the inner surface of the support portion 55 instead of the interference part 34e of the stopper member 34.

## Claims

1. A wheel (10) of an electric wheelchair (100), the wheel (10) attachable to and detachable from a vehicle body of the electric wheelchair (100), comprising:
a cylindrical axle (31) to be fitted into a cylindrical support portion (55) provided in the vehicle body;
an operating rod (32) that is inserted in the cylindrical axle (31);
a first elastic member (38);
a wheel lock member (33) that is movable in a radial direction of the cylindrical axle (31) between an engaging position, in which the wheel lock member (33) engages with the cylindrical support portion (55), and a release position, in which the wheel lock member (33) does not engage with the cylindrical support portion (55); and
a stopper member (34), wherein
the operating rod (32) is movable in an axial direction relative to the cylindrical axle (31) between a wheel lock position, in which the wheel lock member (33) is positioned in the engaging position, and a wheel lock release position, in which the wheel lock member (33) is allowed to move to the release position,
the operating rod (32) is arranged to be pushed from the wheel lock release position toward the wheel lock position by an elastic force of the first elastic member (38) and is movable from the wheel lock position to the wheel lock release position by a pushing force applied by a user, and
the stopper member (34) is arranged to engage with the operating rod (32) when the operating rod (32) is positioned in the wheel lock release position and to retain the operating rod (32) in the wheel lock release position against the elastic force of the first elastic member (38).

2. The wheel (10) of the electric wheelchair (100) according to claim 1, wherein
the stopper member (34) is disposed in an accommodation hole (31b) formed in the cylindrical axle (31) and is movable inside the accommodation hole (31b) in the radial direction of the cylindrical axle (31),
a stopper engagement part (32c) is formed on the operating rod (32), and
when the operating rod (32) is in the wheel lock release position, the stopper member (34) is arranged to engage with the stopper engagement part (32c) to retain the operating rod in the wheel lock release position.

3. The wheel (10) of the electric wheelchair (100) according to claim 2, wherein
a through hole (34a) passing through the stopper member (34) in the axial direction is formed in the stopper member (34),
the operating rod (32) extends through the through hole (34a) in the axial direction, and
the stopper member (34) includes an engagement part (34b) inside the through hole (34a) to engage with the stopper engagement part (32c).

4. The wheel (10) of the electric wheelchair (100) according to claim 2 or **3,** wherein
in a state where the operating rod (32) is in the wheel lock release position and the cylindrical axle (31) is inside the cylindrical support portion (55), the stopper member (34) is arranged not to engage with the stopper engagement part (32c).

5. The wheel (10) of the electric wheelchair (100) according to any one of claims 2 to **4,** wherein
the wheel lock release position includes a first position and a second position that is closer to the wheel lock position than the first position,
the operating rod (32) is arranged to be pushed by the first elastic member (38) from the first position toward the second position,
when the operating rod (32) is in the first position, the operating rod (32) allows the wheel lock member (33) to be in the release position and the stopper member (34) is arranged to engage with the stopper engagement part (32c) to retain the operating rod (32) in the first position, and
when the operating rod (32) is in the second position, the operating rod (32) allows the wheel lock member (33) to be in the release position and the stopper member (34) is arranged not to engage with the stopper engagement part (32c).

6. The wheel (10) of the electric wheelchair (100) according to claim 5, wherein
when the stopper member (34) and the cylindrical axle (31) are inside the cylindrical support portion (55), the operating rod (32) is arranged not to be retained in the first position and to move to the second position by the elastic force of the first elastic member (38).

7. The wheel (10) of the electric wheelchair (100) according to claim 5 or 6, wherein
the stopper member (34) is movable in the radial direction of the cylindrical axle (31) between a stopper position, in which the stopper member (34) engages with the stopper engagement part (32c) to retain the operating rod (32) in the first position, and a stopper release position, in which the stopper member (34) and the stopper engagement part (32c) are released from each other,
the stopper member (34) is biased from the stopper release position to the stopper position by an elastic force of a second elastic member (39), and
when the stopper member (34) and the cylindrical axle (31) are inside the cylindrical support portion (55), the stopper member (34) is arranged such that a movement of the stopper member (34) from the stopper release position to the stopper position is prevented.

8. The wheel (10) of the electric wheelchair (100) according to claim 7, wherein
the stopper member (34) includes an interference part (34e) that is arranged to protrude from an outer peripheral surface of the cylindrical axle (31) when the stopper member (34) is in the stopper position,
when the stopper member (34) and the cylindrical axle (31) are inside the cylindrical support portion (55), the interference part (34e) is arranged to interfere with an inner peripheral surface of the cylindrical support portion (55) to prevent the movement of the stopper member (34) from the stopper release position to the stopper position.

9. The wheel (10) of the electric wheelchair (100) according to any one of claims 1 to 8, wherein
in a process in which the cylindrical axle (31) is inserted into the cylindrical support portion (55) while the operating rod (32) is in the wheel lock release position, the operating rod (32) is arranged to be automatically released from the wheel lock release position.

10. The wheel (10) of the electric wheelchair (100) according to any one of claims 2 to 8, wherein
the stopper member (34) is movable in the radial direction of the cylindrical axle (31) between a stopper position, in which the stopper member (34) engages with the stopper engagement part (32c) to retain the operating rod (32) in the wheel lock release position, and a stopper release position, in which the stopper member (34) and the stopper engagement part (32c) are released from each other,
the stopper member (34) includes an interference part (34e) that is arranged to protrude from an outer peripheral surface (31g) of the cylindrical axle (31) when the stopper member (34) is in the stopper position, and
the interference part (34e) is arranged to be pushed by an inner peripheral surface of the cylindrical support portion (55) and to move the stopper member (34) from the stopper position to the stopper release position.

11. The wheel (10) of the electric wheelchair (100) according to any one of claims 1 to 10, wherein
when the operating rod (32) is in the wheel lock position, the operating rod (32)is arranged to push the wheel lock member (33) outward of the cylindrical axle (31) in the radial direction to bring the wheel lock member (33) into engagement with the cylindrical support portion (55), and
when the operating rod (32) is in the wheel lock release position, the operating rod (32) allows the wheel lock member (33) to sink toward a center of the cylindrical axle (31) in the radial direction.

12. The wheel (10) of the electric wheelchair (100) according to claim 11, wherein
the operating rod (32) includes a large diameter part (32a) and a small diameter part (32b) that are away from each other in the axial direction,
when the operating rod (32) is in the wheel lock position, the large diameter part (32a) is arranged to push the wheel lock member (33) outward of the cylindrical axle (31) in the radial direction and to restrict a movement of the wheel lock member (33) in the radial direction, and
when the operating rod (32) is in the wheel lock release position, the small diameter part (32b) allows the wheel lock member (33) to be closer toward the center of the cylindrical axle (31) in the radial direction than in the wheel lock position.

13. An electric wheelchair (100) comprising the wheel (10) according to any one of claims 1 to 12.

## Patentansprüche

1. Rad (10) eines elektrischen Rollstuhls (100), wobei das Rad (10) an einem Fahrzeugkörper des elektrischen Rollstuhls (100) anbringbar und von diesem abnehmbar ist, umfassend:
eine zylindrische Achse (31), die dazu vorgesehen ist, in einen zylindrischen Stützabschnitt (55) eingepasst zu werden, der in dem Fahrzeugkörper vorgesehen ist;
eine Betätigungsstange (32), die in die zylindrische Achse (31) eingeführt ist;
ein erstes elastisches Element (38);
ein Radverriegelungselement (33), das in einer Radialrichtung der zylindrischen Achse (31) zwischen einer Eingriffsstellung, in der das Radverriegelungselement (33) mit dem zylindrischen Stützabschnitt (55) in Eingriff steht, und einer Freigabestellung, in der das Radverriegelungselement (33) nicht mit dem zylindrischen Stützabschnitt (55) in Eingriff steht, beweglich ist; und
ein Sperrglied (34), wobei
die Betätigungsstange (32) in einer Axialrichtung relativ zu der zylindrischen Achse (31) zwischen einer Radverriegelungsstellung, in der das Radverriegelungselement (33) in der Eingriffsstellung positioniert ist, und einer Radentriegelungsstellung, in der sich das Radverriegelungselement (33) in die Freigabestellung bewegen kann, beweglich ist,
die Betätigungsstange (32) dazu eingerichtet ist, durch eine elastische Kraft des ersten elastischen Elements (38) aus der Radentriegelungsstellung in Richtung der Radverriegelungsstellung gedrückt zu werden, und durch eine von einem Benutzer ausgeübte Druckkraft aus der Radverriegelungsstellung in die Radentriegelungsstellung beweglich ist, und
das Sperrglied (34) dazu eingerichtet ist, mit der Betätigungsstange (32) in Eingriff zu treten, wenn die Betätigungsstange (32) in der Radentriegelungsstellung positioniert ist, und die Betätigungsstange (32) entgegen der elastischen Kraft des ersten elastischen Elements (38) in der Radentriegelungsstellung zu halten.

2. Rad (10) des elektrischen Rollstuhls (100) nach Anspruch 1, wobei
das Sperrglied (34) in einer Aufnahmeöffnung (31b) angeordnet ist, die in der zylindrischen Achse (31) ausgebildet ist, und innerhalb der Aufnahmeöffnung (31b) in der Radialrichtung der zylindrischen Achse (31) beweglich ist,
ein Sperreingriffsabschnitt (32c) an der Betätigungsstange (32) ausgebildet ist, und
wenn sich die Betätigungsstange (32) in der Radentriegelungsstellung befindet, das Sperrglied (34) dazu eingerichtet ist, mit dem Sperreingriffsabschnitt (32c) in Eingriff zu treten, um die Betätigungsstange in der Radentriegelungsstellung zu halten.

3. Rad (10) des elektrischen Rollstuhls (100) nach Anspruch 2, wobei
eine Durchgangsbohrung (34a), die das Sperrglied (34) in der Axialrichtung durchsetzt, in dem Sperrglied (34) ausgebildet ist,
sich die Betätigungsstange (32) in der Axialrichtung durch die Durchgangsbohrung (34a) erstreckt, und
das Sperrglied (34) einen Eingriffsabschnitt (34b) innerhalb der Durchgangsbohrung (34a) aufweist, um mit dem Sperreingriffsabschnitt (32c) in Eingriff zu treten.

4. Rad (10) des elektrischen Rollstuhls (100) nach Anspruch 2 oder 3, wobei
das Sperrglied (34) in einem Zustand, in dem sich die Betätigungsstange (32) in der Radentriegelungsstellung befindet und die zylindrische Achse (31) innerhalb des zylindrischen Stützabschnitts (55) angeordnet ist, dazu eingerichtet ist, nicht mit dem Sperreingriffsabschnitt (32c) in Eingriff zu treten.

5. Rad (10) des elektrischen Rollstuhls (100) nach einem der Ansprüche 2 bis 4, wobei
die Radentriegelungsstellung eine erste Stellung und eine zweite Stellung umfasst, die näher an der Radverriegelungsstellung liegt als die erste Stellung,
die Betätigungsstange (32) dazu eingerichtet ist, durch das erste elastische Element (38) aus der ersten Stellung in Richtung der zweiten Stellung gedrückt zu werden,
wenn sich die Betätigungsstange (32) in der ersten Stellung befindet, die Betätigungsstange (32) ermöglicht, dass sich das Radverriegelungselement (33) in der Freigabestellung befindet, und das Sperrglied (34) dazu eingerichtet ist, mit dem Sperreingriffsabschnitt (32c) in Eingriff zu treten, um die Betätigungsstange (32) in der ersten Stellung zu halten, und
wenn sich die Betätigungsstange (32) in der zweiten Stellung befindet, die Betätigungsstange (32) ermöglicht, dass sich das Radverriegelungselement (33) in der Freigabestellung befindet, und das Sperrglied (34) dazu eingerichtet ist, nicht mit dem Sperreingriffsabschnitt (32c) in Eingriff zu treten.

6. Rad (10) des elektrischen Rollstuhls (100) nach Anspruch 5, wobei
wenn sich das Sperrglied (34) und die zylindrische Achse (31) innerhalb des zylindrischen Stützabschnitts (55) befinden, die Betätigungsstange (32) dazu eingerichtet ist, nicht in der ersten Stellung gehalten zu werden und sich durch die elastische Kraft des ersten elastischen Elements (38) in die zweite Stellung zu bewegen.

7. Rad (10) des elektrischen Rollstuhls (100) nach Anspruch 5 oder 6, wobei
das Sperrglied (34) in der Radialrichtung der zylindrischen Achse (31) zwischen einer Sperrstellung, in der das Sperrglied (34) mit dem Sperreingriffsabschnitt (32c) in Eingriff steht, um die Betätigungsstange (32) in der ersten Stellung zu halten, und einer Sperrfreigabestellung, in der das Sperrglied (34) und der Sperreingriffsabschnitt (32c) voneinander gelöst sind, beweglich ist,
das Sperrglied (34) durch eine elastische Kraft eines zweiten elastischen Elements (39) von der Sperrfreigabestellung in die Sperrstellung vorgespannt ist, und
wenn sich das Sperrglied (34) und die zylindrische Achse (31) innerhalb des zylindrischen Stützabschnitts (55) befinden, das Sperrglied (34) derart eingerichtet ist, dass eine Bewegung des Sperrglieds (34) von der Sperrfreigabestellung in die Sperrstellung verhindert wird.

8. Rad (10) des elektrischen Rollstuhls (100) nach Anspruch 7, wobei
das Sperrglied (34) einen Kontaktabschnitt (34e) aufweist, der dazu eingerichtet ist, von einer Außenumfangsfläche der zylindrischen Achse (31) vorzustehen, wenn sich das Sperrglied (34) in der Sperrstellung befindet,
wenn sich das Sperrglied (34) und die zylindrische Achse (31) innerhalb des zylindrischen Stützabschnitts (55) befinden, der Kontaktabschnitt (34e) dazu eingerichtet ist, an einer Innenumfangsfläche des zylindrischen Stützabschnitts (55) anzustoßen, um die Bewegung des Sperrglieds (34) von der Sperrfreigabestellung in die Sperrstellung zu verhindern.

9. Rad (10) des elektrischen Rollstuhls (100) nach einem der Ansprüche 1 bis 8, wobei
bei einem Vorgang, bei dem die zylindrische Achse (31) in den zylindrischen Stützabschnitt (55) eingeführt wird, während sich die Betätigungsstange (32) in der Radentriegelungsstellung befindet, die Betätigungsstange (32) dazu eingerichtet ist, automatisch aus der Radentriegelungsstellung freigegeben zu werden.

10. Rad (10) des elektrischen Rollstuhls (100) nach einem der Ansprüche 2 bis 8, wobei
das Sperrglied (34) in der Radialrichtung der zylindrischen Achse (31) zwischen einer Sperrstellung, in der das Sperrglied (34) mit dem Sperreingriffsabschnitt (32c) in Eingriff steht, um die Betätigungsstange (32) in der Radentriegelungsstellung zu halten, und einer Sperrfreigabestellung, in der das Sperrglied (34) und der Sperreingriffsabschnitt (32c) voneinander gelöst sind, beweglich ist,
das Sperrglied (34) einen Kontaktabschnitt (34e) aufweist, der dazu eingerichtet ist, von einer Außenumfangsfläche (31g) der zylindrischen Achse (31) vorzustehen, wenn sich das Sperrglied (34) in der Sperrstellung befindet, und
der Kontaktabschnitt (34e) dazu eingerichtet ist, von einer Innenumfangsfläche des zylindrischen Stützabschnitts (55) gedrückt zu werden und das Sperrglied (34) aus der Sperrstellung in die Sperrfreigabestellung zu bewegen.

11. Rad (10) des elektrischen Rollstuhls (100) nach einem der Ansprüche 1 bis 10, wobei
wenn sich die Betätigungsstange (32) in der Radverriegelungsstellung befindet, die Betätigungsstange (32) dazu eingerichtet ist, das Radverriegelungselement (33) in der Radialrichtung nach außen aus der zylindrischen Achse (31) zu drücken, um das Radverriegelungselement (33) mit dem zylindrischen Stützabschnitt (55) in Eingriff zu bringen, und
wenn sich die Betätigungsstange (32) in der Radentriegelungsstellung befindet, die Betätigungsstange (32) ermöglicht, dass das Radverriegelungselement (33) in der Radialrichtung in Richtung einer Mitte der zylindrischen Achse (31) einsinkt.

12. Rad (10) des elektrischen Rollstuhls (100) nach Anspruch 11, wobei
die Betätigungsstange (32) einen Abschnitt mit großem Durchmesser (32a) und einen Abschnitt mit kleinem Durchmesser (32b) aufweist, die in der Axialrichtung voneinander beabstandet sind,
wenn sich die Betätigungsstange (32) in der Radverriegelungsstellung befindet, der Abschnitt mit großem Durchmesser (32a) dazu eingerichtet ist, das Radverriegelungselement (33) in der Radialrichtung nach außen aus der zylindrischen Achse (31) zu drücken und eine Bewegung des Radverriegelungselements (33) in der Radialrichtung zu begrenzen, und
wenn sich die Betätigungsstange (32) in der Radentriegelungsstellung befindet, der Abschnitt mit kleinem Durchmesser (32b) ermöglicht, dass sich das Radverriegelungselement (33) in der Radialrichtung näher zur Mitte der zylindrischen Achse (31) hin befindet als in der Radverriegelungsstellung.

13. Elektrischer Rollstuhl (100), umfassend das Rad (10) nach einem der Ansprüche 1 bis 12.

## Revendications

1. Roue (10) d'un fauteuil roulant électrique (100), la roue (10) pouvant être fixée à un corps de véhicule du fauteuil roulant électrique (100) et détachée de celui-ci, comprenant :
un axe cylindrique (31) destiné à être ajusté dans une partie de support cylindrique (55) prévue dans le corps du véhicule ;
une tige de commande (32) qui est insérée dans l'axe cylindrique (31) ;
un premier élément élastique (38) ;
un élément de verrouillage de roue (33) qui est mobile dans une direction radiale de l'axe cylindrique (31) entre une position d'engagement, dans laquelle l'élément de verrouillage de roue (33) vient en prise avec la partie de support cylindrique (55), et une position de libération, dans laquelle l'élément de verrouillage de roue (33) ne vient pas en prise avec la partie de support cylindrique (55) ; et
un élément de blocage (34), dans laquelle
la tige de commande (32) est mobile dans une direction axiale par rapport à l'axe cylindrique (31) entre une position de verrouillage de la roue, dans laquelle l'élément de verrouillage de roue (33) est positionné dans la position d'engagement, et une position de déverrouillage de la roue, dans laquelle l'élément de verrouillage de roue (33) est autorisé à se déplacer vers la position de libération,
la tige de commande (32) est agencée pour être poussée de la position de déverrouillage de la roue vers la position de verrouillage de la roue par une force élastique du premier élément élastique (38) et est mobile de la position de verrouillage de la roue vers la position de déverrouillage de la roue sous l'effet d'une force de poussée appliquée par un utilisateur, et
l'élément de blocage (34) est agencé pour venir en prise avec la tige de commande (32) lorsque la tige de commande (32) est positionnée dans la position de déverrouillage de la roue et pour maintenir la tige de commande (32) dans la position de déverrouillage de la roue à l'encontre de la force élastique du premier élément élastique (38).

2. Roue (10) du fauteuil roulant électrique (100) selon la revendication 1, dans laquelle
l'élément de blocage (34) est disposé dans un orifice de logement (31b) formé dans l'axe cylindrique (31) et est mobile à l'intérieur de l'orifice de logement (31b) dans la direction radiale de l'axe cylindrique (31),
une partie d'engagement de l'élément de blocage (32c) est formée sur la tige de commande (32), et
lorsque la tige de commande (32) se trouve dans la position de déverrouillage de la roue, l'élément de blocage (34) est agencé pour venir en prise avec la partie d'engagement de l'élément de blocage (32c) afin de maintenir la tige de commande dans la position de déverrouillage de la roue.

3. Roue (10) du fauteuil roulant électrique (100) selon la revendication 2, dans laquelle
un trou traversant (34a) traversant l'élément de blocage (34) dans la direction axiale est formé dans l'élément de blocage (34),
la tige de commande (32) s'étend à travers le trou traversant (34a) dans la direction axiale, et
l'élément de blocage (34) comprend une partie d'engagement (34b) à l'intérieur du trou traversant (34a) pour venir en prise avec la partie d'engagement de l'élément de blocage (32c).

4. Roue (10) du fauteuil roulant électrique (100) selon la revendication 2 ou 3, dans laquelle
dans un état dans lequel la tige de commande (32) se trouve dans la position de déverrouillage de la roue et l'axe cylindrique (31) se trouve à l'intérieur de la partie de support cylindrique (55), l'élément de blocage (34) est agencé pour ne pas venir en prise avec la partie d'engagement de l'élément de blocage (32c).

5. Roue (10) du fauteuil roulant électrique (100) selon l'une quelconque des revendications 2 à 4, dans laquelle
la position de déverrouillage de la roue comprend une première position et une deuxième position qui est plus proche de la position de verrouillage de la roue que la première position,
la tige de commande (32) est agencée pour être poussée par le premier élément élastique (38) de la première position vers la deuxième position,
lorsque la tige de commande (32) se trouve dans la première position, la tige de commande (32) permet à l'élément de verrouillage de roue (33) de se trouver dans la position de libération et l'élément de blocage (34) est agencé pour venir en prise avec la partie d'engagement de l'élément de blocage (32c) afin de maintenir la tige de commande (32) dans la première position, et
lorsque la tige de commande (32) se trouve dans la deuxième position, la tige de commande (32) permet à l'élément de verrouillage de roue (33) de se trouver dans la position de libération et l'élément de blocage (34) est agencé pour ne pas venir en prise avec la partie d'engagement de l'élément de blocage (32c).

6. Roue (10) du fauteuil roulant électrique (100) selon la revendication 5, dans laquelle
lorsque l'élément de blocage (34) et l'axe cylindrique (31) se trouvent à l'intérieur de la partie de support cylindrique (55), la tige de commande (32) est agencée pour ne pas être maintenue dans la première position et pour se déplacer vers la deuxième position sous l'effet de la force élastique du premier élément élastique (38).

7. Roue (10) du fauteuil roulant électrique (100) selon la revendication 5 ou 6, dans laquelle
l'élément de blocage (34) est mobile dans la direction radiale de l'axe cylindrique (31) entre une position de blocage, dans laquelle l'élément de blocage (34) vient en prise avec la partie d'engagement de l'élément de blocage (32c) afin de maintenir la tige de commande (32) dans la première position, et une position de libération de l'élément de blocage, dans laquelle l'élément de blocage (34) et la partie d'engagement de l'élément de blocage (32c) sont désengagés l'un de l'autre,
l'élément de blocage (34) est sollicité élastiquement de la position de libération de l'élément de blocage vers la position de blocage par une force élastique d'un second élément élastique (39), et
lorsque l'élément de blocage (34) et l'axe cylindrique (31) se trouvent à l'intérieur de la partie de support cylindrique (55), l'élément de blocage (34) est agencé de telle sorte qu'un déplacement de l'élément de blocage (34) de la position de libération de l'élément de blocage vers la position de blocage est empêché.

8. Roue (10) du fauteuil roulant électrique (100) selon la revendication 7, dans laquelle
l'élément de blocage (34) comprend une partie d'interférence (34e) qui est agencée pour faire saillie depuis une surface périphérique extérieure de l'axe cylindrique (31) lorsque l'élément de blocage (34) se trouve dans la position de blocage,
lorsque l'élément de blocage (34) et l'axe cylindrique (31) se trouvent à l'intérieur de la partie de support cylindrique (55), la partie d'interférence (34e) est agencée pour entrer en interférence avec une surface périphérique intérieure de la partie de support cylindrique (55) afin d'empêcher le déplacement de l'élément de blocage (34) de la position de libération de l'élément de blocage vers la position de blocage.

9. Roue (10) du fauteuil roulant électrique (100) selon l'une quelconque des revendications 1 à 8, dans laquelle
lors d'un processus dans lequel l'axe cylindrique (31) est inséré dans la partie de support cylindrique (55) tandis que la tige de commande (32) se trouve dans la position de déverrouillage de la roue, la tige de commande (32) est agencée pour être automatiquement libérée de la position de déverrouillage de la roue.

10. Roue (10) du fauteuil roulant électrique (100) selon l'une quelconque des revendications 2 à 8, dans laquelle
l'élément de blocage (34) est mobile dans la direction radiale de l'axe cylindrique (31) entre une position de blocage, dans laquelle l'élément de blocage (34) vient en prise avec la partie d'engagement de l'élément de blocage (32c) afin de maintenir la tige de commande (32) dans la position de déverrouillage de la roue, et une position de libération de l'élément de blocage, dans laquelle l'élément de blocage (34) et la partie d'engagement de l'élément de blocage (32c) sont désengagés l'un de l'autre,
l'élément de blocage (34) comprend une partie d'interférence (34e) qui est agencée pour faire saillie depuis une surface périphérique extérieure (31g) de l'axe cylindrique (31) lorsque l'élément de blocage (34) se trouve dans la position de blocage, et
la partie d'interférence (34e) est agencée pour être poussée par une surface périphérique intérieure de la partie de support cylindrique (55) et pour déplacer l'élément de blocage (34) de la position de blocage vers la position de libération de l'élément de blocage.

11. Roue (10) du fauteuil roulant électrique (100) selon l'une quelconque des revendications 1 à 10, dans laquelle
lorsque la tige de commande (32) se trouve dans la position de verrouillage de la roue, la tige de commande (32) est agencée pour pousser l'élément de verrouillage de roue (33) vers l'extérieur de l'axe cylindrique (31) dans la direction radiale afin d'amener l'élément de verrouillage de roue (33) en prise avec la partie de support cylindrique (55), et
lorsque la tige de commande (32) se trouve dans la position de déverrouillage de la roue, la tige de commande (32) permet à l'élément de verrouillage de roue (33) de s'enfoncer vers un centre de l'axe cylindrique (31) dans la direction radiale.

12. Roue (10) du fauteuil roulant électrique (100) selon la revendication 11, dans laquelle
la tige de commande (32) comprend une partie de grand diamètre (32a) et une partie de petit diamètre (32b) qui sont espacées l'une de l'autre dans la direction axiale,
lorsque la tige de commande (32) se trouve dans la position de verrouillage de la roue, la partie de grand diamètre (32a) est agencée pour pousser l'élément de verrouillage de roue (33) vers l'extérieur de l'axe cylindrique (31) dans la direction radiale et pour limiter un déplacement de l'élément de verrouillage de roue (33) dans la direction radiale, et
lorsque la tige de commande (32) se trouve dans la position de déverrouillage de la roue, la partie de petit diamètre (32b) permet à l'élément de verrouillage de roue (33) de se trouver plus près du centre de l'axe cylindrique (31) dans la direction radiale que dans la position de verrouillage de la roue.

13. Fauteuil roulant électrique (100) comprenant la roue (10) selon l'une quelconque des revendications 1 à 12.
